(19) **Europäisches Patentamt / European Patent Office / Office européen des brevets**

(11) **EP 2 083 109 B1**

(12) **EUROPEAN PATENT SPECIFICATION**

(45) Date of publication and mention
of the grant of the patent:
**25.07.2012 Bulletin 2012/30**

(51) Int Cl.:
*D06F 37/22* *(2006.01)*    *D06F 37/24* *(2006.01)*

(21) Application number: **08164711.7**

(22) Date of filing: **19.09.2008**

(54) **Drum type washing machine having ball balancers and controlling method of the same**

Trommelwaschmaschine mit Auswuchtkugeln und Steuerverfahren hierfür

Machine à laver de type à tambour dotée de compensateurs à roulement et procédé de commande correspondant

(84) Designated Contracting States:
**DE FR GB**

(30) Priority: **22.01.2008 KR 20080006469**

(43) Date of publication of application:
**29.07.2009 Bulletin 2009/31**

(73) Proprietor: **Samsung Electronics Co., Ltd.
Gyeonggi-do (KR)**

(72) Inventors:
 • **Kim, Hyun Bae
 Gyeonggi-do (KR)**

 • **Lee, Sung Mo
 Gyeonggi-do (KR)**
 • **Choi, Kyo Soon
 Seoul (KR)**

(74) Representative: **Grünecker, Kinkeldey,
Stockmair & Schwanhäusser
Leopoldstrasse 4
80802 München (DE)**

(56) References cited:
**EP-A- 1 096 050    EP-A- 1 533 411
EP-A- 1 950 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 083 109 B1**

**Description**

1. Field of the Invention

The present invention relates to a washing machine, and, more particularly, to a drum type washing machine having ball balancers and a controlling method of the same that are capable of reducing spin-drying time.

2. Description of the Related Art

Generally, a washing machine is an electric home appliance, including a water tub to store water (wash water or rinse water), a wash tub rotatably mounted in the water tub to receive laundry, and a wash motor to generate a drive force necessary to rotate the wash tub, to lift the laundry in the wash tub along the inner wall of the wash tub and drop the lifted laundry, during the rotation of the wash tub, thereby washing the laundry.

In recent years, there has been a drum type washing machine constructed in a structure in which a drum is mounted in a machine body such that a rotary shaft of the drum is parallel to the bottom of the machine body, and laundry is lifted and dropped, during the rotation of the drum, such that the laundry collides with wash water, and therefore, the laundry is washed. The drum type washing machine washes laundry such that the laundry is less damaged than other washing machines, with the result that the drum type washing machine is becoming popular among users.

In such a drum type washing machine, however, the rotary tub, in which the laundry is placed, is horizontally disposed, with the result that the rotary tub is rotated at high speed, while laundry is collected on the bottom of the rotary tub due to gravity, during a spin-drying operation. Consequently, the center of gravity of the laundry does not coincide with the center of rotation of the rotary tub, with the result that there is a great possibility of vibration and noise. To solve the problem, the conventional drum type washing machine includes ball balancers mounted in the rotary tub to maintain the dynamic balance of the rotary tub.

When the drum type washing machine having the ball balancers performs a spin-drying process using a centrifugal force generated by the high-speed rotation of the rotary tub, the rotary tub is vibrated to induce noise in an unbalanced state in which laundry placed in the rotary tub makes a lump at one side. For this reason, it is preferred to perform a spin-drying operation in a balanced state in which the laundry is uniformly distributed in the rotary tub.

To perform the spin-drying operation in the balanced state, the conventional drum type washing machine having ball balancers is operated to rotate the rotary tub to an eccentricity detection rotation speed, detect the eccentricity amount of the rotary tub while rotating the rotary tub at a constant speed, when the detected eccentricity amount is less than an allowable eccentricity amount, accelerate the rotary tub to a ball balancer position estimate speed, estimate the positions of the ball balancers while rotating the rotary tub at a constant speed, decide a point of time for spin-drying acceleration using the estimated positions of the ball balancers, and spin-drying accelerate the rotary tub at the decided point of time for spin-drying acceleration.

In the conventional drum type washing machine having ball balancers as described above, however, the rotary tub is rotated at a constant speed for a predetermined period of time to estimate the positions of the ball balancers, and then the rotary tub is spin-drying accelerated. As a result, water rising along the outside of the rotary tub by the rotating force of the rotary tub during the constant-speed rotation of the rotary tub continue to rise along the outside of the rotary tub even during the spin-drying acceleration of the rotary tub. The water rising along the outside of the rotary tub is drained later out of the water tub, with the result that spin-drying time increases.

Also, in the conventional drum type washing machine having ball balancers as described above, the rotary tub is accelerated to the predetermined speed, and the generation of vibration from the rotary tub is detected using the rotation speeds of the rotary tub before and after the acceleration. As a result, the generation of vibration from the rotary tub is not detected when the rotary tub is not accelerated.

EP 1 950 336 A, which falls under Art 54.3 EPC, refers to a washing machine with balancers and control method thereof and in particular to a washing machine that is capable of reducing vibration generated from a water tub due to eccentricity, i.e., unbalance, generated during the rotation of the washing machine. A vibration detection unit detects vibration of the water tub that is changed while the number of rotations of the motor is maintained at a predetermined number of rotations before excessive vibration is generated from the water tub until the balls reach a balancing position. The balancing position is the side opposite to concentrated laundry causing the unbalance. Therefore, excessive vibration of the water tub is prevented from being generated before the balls reach the balancing position during a spin-drying operation of the washing machine with the balancers. The washing machine is capable of braking the motor, when the water tub is vibrated at more than a predetermined vibration level after the re-increasing the RPM of the motor, to lower the RPM of the motor to a predetermined number of rotations and re-increasing the RPM of the motor, whereby the excessive vibration of the water tub is prevented.

EP 1 096 050 A2 refers to a method for balancing rotating bodies. The method involves using a balance device with ball weights moving freely in a circular track concentric to a drum. An imbalance detection unit produces an imbalance signal during rotation or fluctuations in rotation speed: The system is rotated at a speed below its critical rotation speed, or that of its bearing system. The balancing unit is made so that the ball weights are carried in the track at this rotation speed. An evaluation unit produces the curve of imbalance amount and accelerates the bodies to a rotation speed above the critical speed in the area of the curve minimum or on exceeding a threshold value.

EP 1 533 411 A2 refers to a washing machine and method for controlling the same and which performs spin-drying of laundry by a rotating operation of a rotary tub. A graph is provided for indicating control characteristics of rotational speeds of a rotary tub according to vibration levels of the washing machine. To obtain a sufficient spin-drying effect, the rotational speed of the rotary tub needs to ultimately reach a maximum rotational speed Vmax of the rotary tub. A control unit controls a motor driving unit so that the rotational speed of the rotary tub gradually reaches a maximum rotational speed Vmax within a certain period. A sudden increase of the rotational speed of the rotary tub may result in high vibration so that attenuating by the vibration of the rotary tub by suitably controlling the variation of the rotational speed of the rotary tub according to the vibration level of the rotary tub while increasing the rotational speed may be needed. A characteristic curve is provided that represents the rotational speed variation of the rotary tub in the washing machine. On the characteristic curve, estimation intervals, such as intervals t1-t1', t2-t2', t3-t3', t4-t4' and t5-t5' are formed. The estimation intervals represent periods in which the rotational speed of the rotary tub is uniformly maintained and the control unit estimates the vibration level. During each of the first through fifth estimation intervals, the control unit detects values of the drive power at positions of tn and tn' respectively, and determines the vibration level of the rotary tub using a difference between the drive power values. That is, if the difference is large the vibration is determined to be large in proportion to the difference, while if the difference is small, the vibration is determined to be small in proportion to the difference.

## SUMMARY OF THE INVENTION

It is the object of the present invention to provide an improved drum type washing machine having ball balancers and a controlling method of the same that are capable of reducing spin drying time.

This object is solved by the subject matter of the independent claims.

Preferred embodiments are defined by the dependent claims.

It is an aspect of the invention to provide a drum type washing machine having ball balancers and a controlling method of the same that are capable of detecting the generation of vibration from a rotary tub even when the rotary tub is not accelerated.

In accordance with one aspect, the present invention provides a drum type washing machine having ball balancers, including a rotary tub having the ball balancers mounted therein, a wash motor to rotate the rotary tub, and a controller to detect the eccentricity amount of the rotary tub while controlling the rotary tub to be rotated at a first rotation speed, and, when the rotation speed of the rotary tub reaches a second rotation speed, to control the rotary tub, such that the rotary tub is decelerated to a third rotation speed and a drainage process is carried out.

Preferably, the second rotation speed is less than a resonance range rotation speed of the rotary tub.

Preferably, the controller controls the rotary tub such that the rotary tub is accelerated to a spin-drying acceleration rotation speed after the rotation speed of the rotary tub is decreased to the third rotation speed, and the third rotation speed is a speed at which the positions of the ball balancers are not suddenly changed when the rotary tub is accelerated to the spin-drying acceleration rotation speed.

Preferably, the drum type washing machine further includes a wash motor drive unit having a command voltage generator, and the controller detects vibration from the rotary tub using a command voltage generated by the command voltage generator. The controller calculates the sum of preceding zone command voltages, generated at a plurality of points of time in a preceding zone, and the sum of succeeding zone command voltages, generated at a plurality of points of time in a succeeding zone, to calculate the difference between the sum of preceding zone command voltages and the sum of succeeding zone command voltages, and, when the calculated difference between the sum of preceding zone command voltages and the sum of succeeding zone command voltages is not less than an allowable difference between the sum of preceding zone command voltages and the sum of succeeding zone command voltages, detects that vibration from the rotary tub has been generated.

In accordance with another aspect, the present invention provides a controlling method of a drum type washing machine having ball balancers, including determining whether a spin-drying operation entry condition is satisfied, when the spin-drying operation entry condition is satisfied, accelerating a rotary tub having the ball balancers mounted therein to a first rotation speed to detect the eccentricity amount of the rotary tub, and, when the detected eccentricity amount is less than an allowable eccentricity amount, accelerating the rotary tub to a second rotation speed and decelerating the rotary tub to a third rotation speed.

Preferably, the second rotation speed is less than a resonance range rotation speed of the rotary tub.

Preferably, the controlling method further includes spin-drying accelerating the rotary tub after decelerating the rotary tub to the third rotation speed, and the third rotation speed is a speed at which the positions of the ball balancers are not suddenly changed when the rotary tub is spin-drying accelerated.

Preferably, the controlling method further includes, when the spin-drying operation entry condition is satisfied, detecting that vibration from the rotary tub has been generated using a command voltage generated by a wash motor drive unit to drive the rotary tub. The step of detecting that vibration from the rotary tub has been generated includes calculating the sum of preceding zone command voltages, generated at a plurality of points of time in a preceding zone, and the sum of succeeding zone command voltages, generated at a plurality of points of time in a succeeding zone, to calculate the difference between the sum of preceding zone command voltages and the sum of succeeding zone command voltages, and, when the calculated difference between the sum of preceding zone command voltages and the sum of succeeding zone command voltages is not less than an allowable difference between the sum of preceding zone command voltages and the sum of succeeding zone command voltages, detecting that vibration from the rotary tub has been generated.

Additional aspects and/or advantages of the invention will be set forth in part in the description which follows and, in part, will be obvious from the description, or may be learned by practice of the invention.

## BRIEF DESCRIPTION OF THE DRAWINGS

These and/or other aspects and advantages of the invention will become apparent and more readily appreciated from the following description of the embodiments, taken in conjunction with the accompanying drawings, of which:

FIG. 1 is a side sectional view illustrating a drum type washing machine having ball balancers according to the present invention;

FIG. 2 is a block diagram illustrating a control system of the drum type washing machine having ball balancers according to the present invention;

FIG. 3 is a view illustrating the detection of vibration from the drum type washing machine having ball balancers according to the present invention;

FIGS. 4 and 5 are flow charts illustrating a control process of the drum type washing machine having ball balancers according to the present invention; and

FIG. 6 is a graph illustrating the rotation speed of a rotary tub of the drum type washing machine having ball balancers according to the present invention according to a controlling method of the same.

## DETAILED DESCRIPTION OF THE PREFERRED EMBODIMENTS

Reference will now be made in detail to the embodiment of the present invention, examples of which are illustrated in the accompanying drawings, wherein like reference numerals refer to like elements throughout. The embodiment is described below to explain the present invention by referring to the figures.

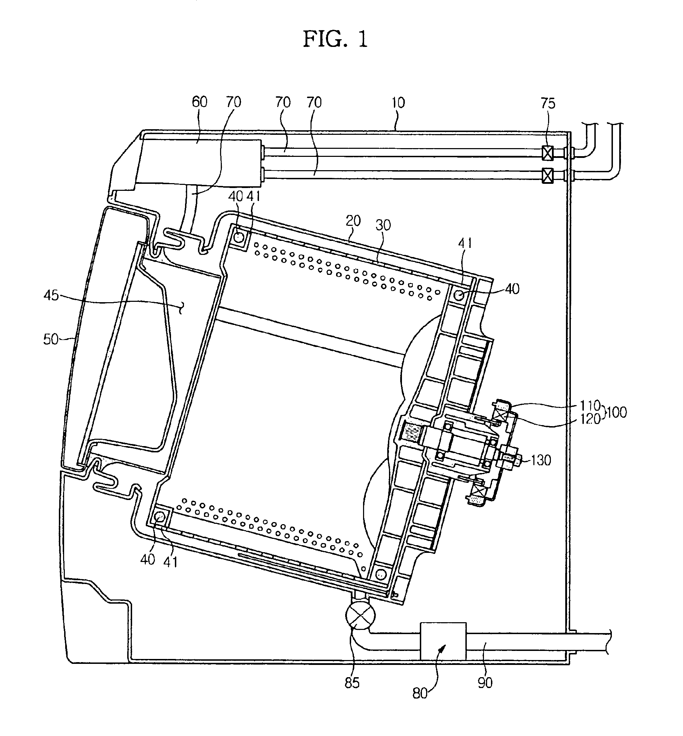

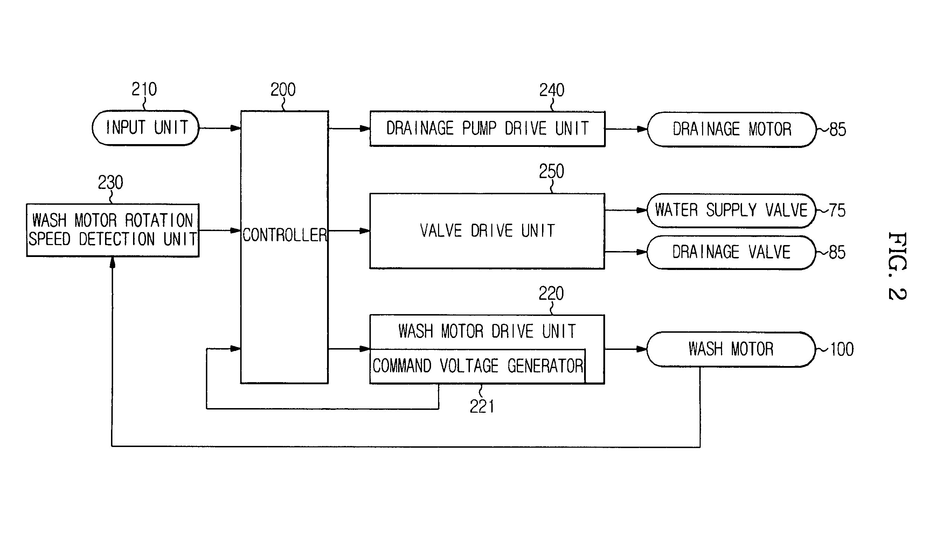

Referring to FIGS. 1 and 2, a drum type washing machine 1 having ball balancers according to the present invention (hereinafter referred to as a 'drum type washing machine') includes a machine body 10 forming the external appearance of the drum type washing machine, a water tub 20 mounted in the machine body 10 to receive wash water or rinse water, the water tub 20 being open at the front thereof, a rotary tub 30 rotatably mounted in the water tub 20, the rotary tub 30 being open at the front thereof, a door 50 to open and close an opening 45 of the water tub 20 in front of the water tub 20, a wash motor 100 mounted at the rear of the water tub 20 to rotate a rotary shaft 130 connected to the rotary tub 30 and thus rotate the rotary tub 30, a water supply pipe 70 defining a flow channel along which wash water or rinse water is supplied from the outside of the machine body 10 to the water tub 20, a water supply valve 75 mounted on the water supply pipe 70 to open and close the water supply pipe 70 under the control of a controller 200, which will be described below, a detergent supply unit 60 mounted in the water supply pipe 70 to supply detergent or rinse to the water tub 20, a drainage pipe 90 connected to the lower end of the water tub 20 to define a flow channel along which wash water or rinse water, stored in the water tub 20, is drained outside the machine body 10, a drainage pump 80, having a drainage motor 85a, mounted on the drainage pipe 90 to drain wash water or rinse water from the water tub 20 outside the machine body 10, and a drainage valve 85 to open and close the drainage pipe 90 under the control of the controller 200, and the controller 200 to control the overall operation of the drum type washing machine 1.

At the front edge and the rear edge of the rotary tub 30 are formed ball balancer receiving parts 41 along which ball balancers 40 are movable. The ball balancers 40 serves to balance the rotary tub 30 during the rotation of the rotary tub 30.

The wash motor 100 includes a rotor 120 connected to the rotary shaft 130 and a stator 110 to provide a rotary magnetic field to the rotor 120 such that the rotor 120 can be rotated. The wash motor 100 rotates the rotary tub 30, and the rotation speed of the rotary tub 30 is controlled by the controller 200.

At the input side of the controller 200 are provided an input unit 210 to allow a user to input a control command to the controller 200 and a wash motor rotation speed detection unit 230 to detect the rotation speed of the wash motor 100. At the output side of the controller 200 are provided a wash motor drive unit 220 to drive the wash motor 100, a drainage pump drive unit 240 to drive the drainage motor 85a , and a valve drive unit 250 to drive the water supply valve 75 and the drainage valve 85.

The input unit 210 provides a washing course selected by the user to the controller 200.

The wash motor rotation speed detection unit 230 detects and provides the rotation speed of the wash motor 100 to the controller 200.

The wash motor drive unit 220 is realized by a general motor drive device. The wash motor drive unit 220 includes a command voltage generator 221. The command voltage generator 221 provides a command voltage reflecting the torque of the wash motor 100 to the controller 200.

Meanwhile, the controller 200 supplies a control signal to the wash motor drive unit 220, such that the rotary tub 30 is accelerated to a first rotation speed (eccentricity detection rotation speed), to detect the eccentricity amount of the rotary tub 30. When the detected eccentricity amount is less than an allowable eccentricity amount, the controller 200 controls the rotary tub 30 to be accelerated to a second rotation speed (drainage limit rotation speed). When the rotation speed of the rotary tub 30 reaches the second rotation speed (drainage limit rotation speed), the controller 200 controls the rotary tub 30 to be decelerated to a third rotation speed (ball balancer position estimate speed). Here, the second rotation speed (drainage limit rotation speed) is set to be less than a resonance range rotation speed of the rotary tub 30.

After the controller 200 controls the rotary tub 30 to reach the third rotation speed (ball balancer position estimate speed), the controller 200 estimates the positions of the ball balancers 40 and decides a point of time for spin-drying acceleration of the rotary tub 30 using the estimated positions of the ball balancers 40. Subsequently, the controller 200 controls the rotary tub 30 to be spin-drying accelerated at the point of time for spin-drying acceleration. At this time, the third rotation speed (ball balancer position estimate speed) is set to be a rotation speed at which the positions of the ball balancers 40 are not suddenly changed when the rotary tub 30 is spin-drying accelerated.

When the rotary tub 30 is rotated, the controller 200 substitutes command voltages V1 to Vn and Vn+1 to Vn+n generated from the command voltage generator 221 at a plurality of points of time to Mathematical equation 1 below to acquire the difference between the sum of preceding zone command voltages and the sum of succeeding zone command voltages. When the difference between the sum of preceding zone command voltages and the sum of succeeding zone command voltages is not less than an allowable difference between the sum of preceding zone command voltages and the sum of succeeding zone command voltages, the controller 200 detects that vibration from the rotary tub 30 has been generated.

## [Mathematical equation 1]

$$Vdiff = [V1 + V2 + \ldots + Vn] - [Vn+1 + Vn+2 + \ldots + Vn+n]$$

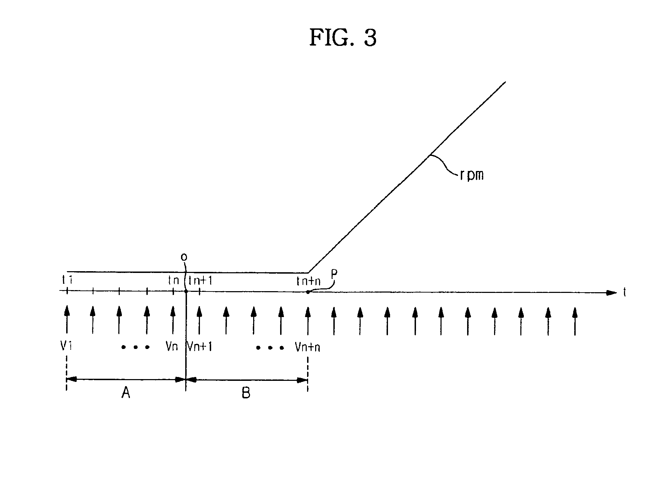

Where, Vdiff is the difference between the sum of preceding zone command voltages and the sum of succeeding zone command voltages, V1 + V2 + ... + Vn is the sum of command voltages V1, V2 ... Vn inputted from the command voltage generator 221 at n points of past time having predetermined time intervals in the preceding zone A from the present time P, as shown in FIG. 3, during the rotation of the wash motor 100, and Vn+1 + Vn+2 + ... + Vn+n is the sum of command voltages Vn+1, Vn+2 ... Vn+n inputted from the command voltage generator 221 at n points of past time having predetermined time intervals in the succeeding zone B from the present time P, as shown in FIG. 3, during the rotation of the wash motor 100. Here, the succeeding zone is a zone from 2 seconds ago to the present time P, and the preceding zone is a zone between 4 seconds ago to 2 seconds ago from the present time P.

In describing the ground for the method of detecting the generation of vibration from the rotary tub 30, when the rotary tub 30 is vibrated, a frictional force of the rotary tub 30 is changed according to the vibration from the rotary shaft 30. As a result, the load of the washing motor 100 is changed in proportion to the frictional force of the rotary shaft 130. And the command voltage generated from the command voltage generator 221 of the wash motor drive unit 220 is proportional to the load applied to the wash motor 100. Consequently, the difference between the sum of preceding zone command voltages and the sum of succeeding zone command voltages calculated by Mathematical equation 1 above means the fluctuation of load applied to the wash motor 100 and reflects the vibration from the rotary tub 30.

Hereinafter, a controlling method of the drum type washing machine having ball balancers according to the present invention will be described with reference to the accompanying drawings.

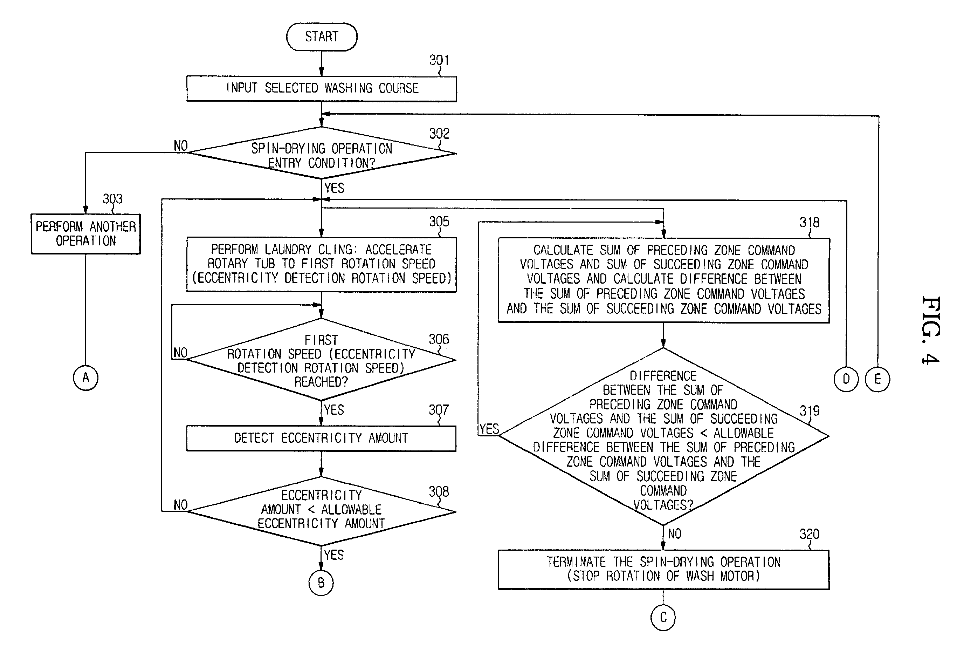

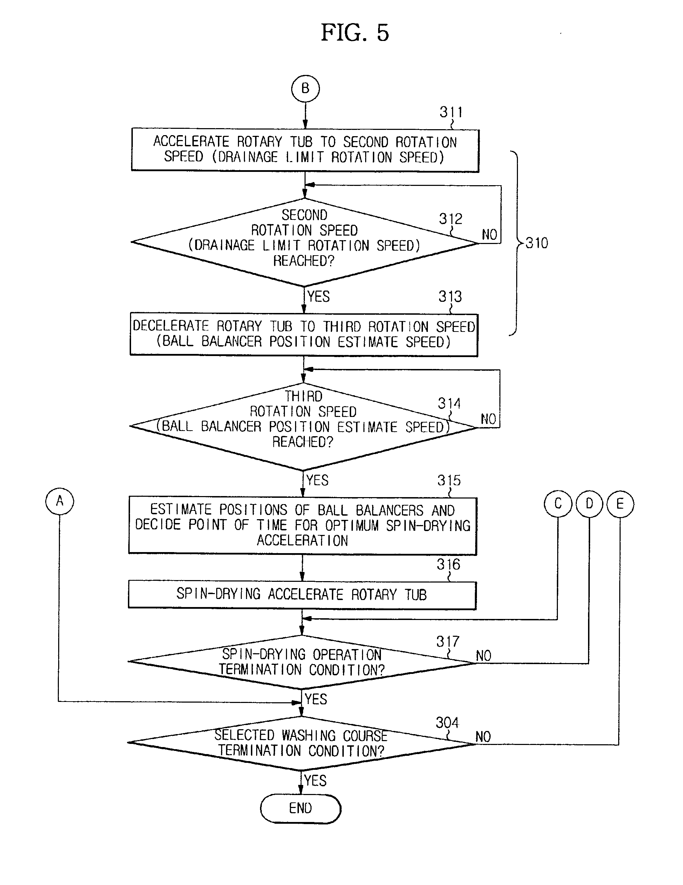

Referring to FIGS. 4 and 5, when a user selects a washing course through the input unit and the selected washing course is inputted from the input unit 210 (301), the controller 200 determines whether a spin-drying operation entry condition is satisfied (302). Here, the washing course is a combination of a washing operation, a rinsing operation, a spin-drying operation, and a drying operation.

When the spin-drying operation entry condition is not satisfied, the controller 200 controls another operation to be carried out (303) and determines whether a selected washing course termination condition is satisfied (304). When the selected washing course termination condition is not satisfied, the procedure returns to Step 302. When the selected washing course termination condition is satisfied, the procedure is terminated.

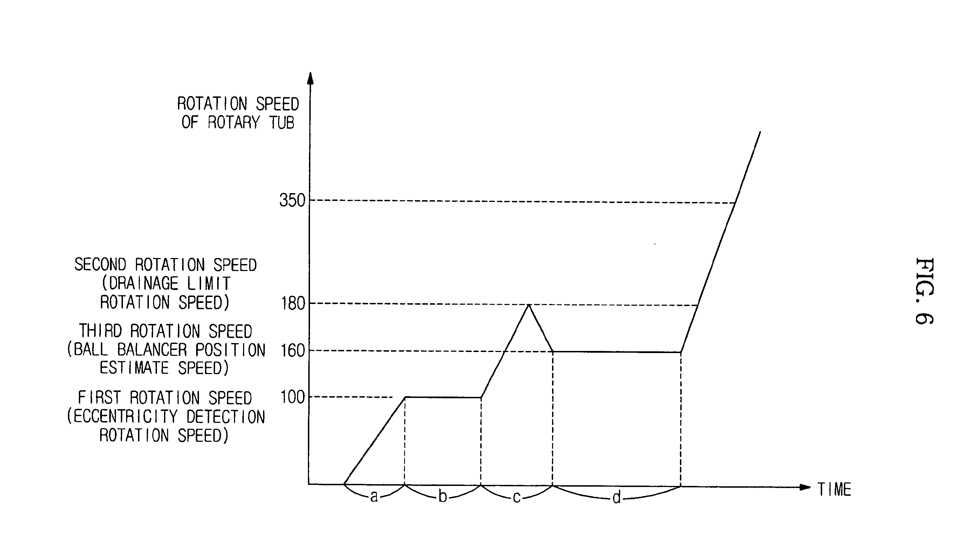

On the other hand, when the spin-drying operation entry condition is satisfied, the controller 200 supplies a control signal to the wash motor drive unit 220 to perform laundry cling in which the rotary tub 30 is accelerated to a first rotation speed (eccentricity detection rotation speed), as in zone a of FIG. 6, such that laundry can be uniformly distributed on the inner wall of the rotary tub 30 (305). Here, the first rotation speed (eccentricity detection rotation speed) is a speed to detect the eccentricity amount of the laundry. As shown in the example of FIG. 6, the first rotation speed may be set to be approximately 100 rpm.

Subsequently, the controller 200 determines whether the rotation speed of the rotary tub 30 has reached the first rotation speed (eccentricity detection rotation speed) using the rotation speed of the wash motor 100 inputted from the wash motor rotation speed detection unit 230 (306).

When the rotation speed of the rotary tub 30 has not reached the first rotation speed (eccentricity detection rotation speed), the controller 200 controls the rotary tub 30 to be continuously accelerated. On the other hand, when the rotation speed of the rotary tub 30 has reached the first rotation speed (eccentricity detection rotation speed), the controller 200 controls the rotary tub 30 to be rotated at a constant speed for a predetermined period of time, as in zone b of FIG. 6, and detects the eccentricity amount of the laundry (307). Here, the eccentricity amount of the laundry may be detected by a general method of detecting eccentricity amount of the laundry using an angular speed deviation during one rotation of the rotary tub 30 for a predetermined period of time.

Subsequently, the controller 200 determines whether the detected eccentricity amount is less than an allowable eccentricity amount (308). When the detected eccentricity amount is not less than the allowable eccentricity amount, the procedure returns to Step 305. On the other hand, when the detected eccentricity amount is less than the allowable eccentricity amount, the controller 200 controls the rotary tub 30 to be accelerated to a second rotation speed (drainage limit rotation speed), as in zone c of FIG. 6, and performs a drainage process in which the rotary tub 30 is decelerated to a third rotation speed (ball balancer position estimate speed).

Specifically, the controller 200 supplies a control signal to the wash motor drive unit 220 such that the rotary tub 30 is accelerated to the second rotation speed (drainage limit rotation speed) (311). Here, the second rotation speed (drainage limit rotation speed) is a limit value less than a resonance range rotation speed of the rotary tub 30 and greater than the third rotation speed (ball balancer position estimate speed). Also, the second rotation speed (drainage limit rotation speed) is set in consideration of the mechanical properties of the drum type washing machine 1. As shown in FIG. 6, the second rotation speed (drainage limit rotation speed) may be set to be around 180 rpm. Subsequently, the controller 200 determines whether the rotation speed of the rotary tub 30 detected by the wash motor rotation speed detection unit 230 has reached the second rotation speed (drainage limit rotation speed) (312). When the rotation speed of the rotary tub 30 has not reached the second rotation speed (drainage limit rotation speed), the controller 200 supplies a control signal to the wash motor drive unit 220 such that the rotary tub 30 is continuously accelerated. When the rotation speed of the rotary tub 30 has reached the second rotation speed (drainage limit rotation speed), the controller 200 supplies a control signal to the wash motor drive unit 220 such that the rotary tub 30 is decelerated to the third rotation speed (ball balancer position estimate speed) (313). As a result, water rising along the outside of the rotary tub 30 falls to the bottom of the water tub 20 and is then drained.

Subsequently, the controller 200 determines whether the rotation speed of the rotary tub 30 detected by the wash motor rotation speed detection unit 230 has reached third rotation speed (ball balancer position estimate speed) (314). Here, the third rotation speed (ball balancer position estimate speed) is set to be a rotation speed at which the positions of the ball balancers 40 are not suddenly changed when the rotary tub 30 is spin-drying accelerated.

When the rotation speed of the rotary tub 30 has not reached third rotation speed (ball balancer position estimate speed), the controller 200 supplies a control signal to the wash motor drive unit 220 such that the rotary tub 30 is decelerated. On the other hand, when the rotation speed of the rotary tub 30 has reached third rotation speed (ball balancer position estimate speed), the controller 200 supplies a control signal to the wash motor drive unit 220, such that the rotary tub 30 is rotated at a constant speed, as in zone d of FIG. 6, estimates the positions of the ball balancers, and decides a point of time for spin-drying acceleration using the estimated positions of the ball balancers (315). Here, the method of estimating the positions of the ball balancers and the method of deciding the point of time for spin-drying acceleration are well known, and therefore, a detailed description thereof will not be given.

Subsequently, the controller 200 supplied a control signal to the wash motor drive unit 220 such that the rotary tub 30 is spin-drying accelerated at the point of time for spin-drying acceleration (316).

Subsequently, the controller 200 determines whether a spin-drying operation termination condition is satisfied (317). When the spin-drying operation termination condition is not satisfied, the controller 200 continues to determine whether the spin-drying operation termination condition is satisfied. On the other hand, when the spin-drying operation termination condition is satisfied, the procedure returns to Step 305.

While the controller 200 performs Step 305 to Step 316, the controller 200 also performs a control process to detect the generation of vibration from the rotary tub 30. In other words, the sum of preceding zone command voltages and the sum of succeeding zone command voltages are calculated, as previously described, and the difference between the sum of preceding zone command voltages and the sum of succeeding zone command voltages is calculated (318).

Subsequently, the controller 200 determines whether the calculated difference between the sum of preceding zone command voltages and the sum of succeeding zone command voltages is less than an allowable difference between the sum of preceding zone command voltages and the sum of succeeding zone command voltages (319). When the calculated difference between the sum of preceding zone command voltages and the sum of succeeding zone command voltages is less than the allowable difference between the sum of preceding zone command voltages and the sum of succeeding zone command voltages, the procedure returns to Step 318. On the other hand, when the calculated difference between the sum of preceding zone command voltages and the sum of succeeding zone command voltages is not less than the allowable difference between the sum of preceding zone command voltages and the sum of succeeding zone command voltages, the controller 200 terminates the spin-drying operation (320), and the procedure returns to Step 317.

As apparent from the above description, the present invention has the effect of reducing spin-drying time of the drum type washing machine having ball balancers.

Also, the present invention has the effect of detecting the generation of vibration from the rotary tub even when the rotary tub is not accelerated. Consequently, the present invention has the effect of protecting the drum type washing machine having ball balancers from breakage.

Although a few embodiments of the present invention have been shown and described, it would be appreciated by those skilled in the art that changes may be made in this embodiment without departing from the scope of the invention. which is defined in the claims.

**Claims**

1. A drum type washing machine having ball balancers, comprising:

a rotary tub (30) having the ball balancers mounted therein;
a wash motor (100) to rotate the rotary tub (30); and
a controller (200) for controlling the rotary tub (30) to rotate at a first rotation speed for a predetermined period of time, and for controlling the rotary tub (30) to be accelerated to a second rotation speed,
**characterized in that** the rotary tub (30) is rotated at said first rotation speed to detect an eccentricity amount of the rotary tub (30) by using an angular speed duration during rotation of the rotary tub (30), and, when the detected eccentricity amount is less than an allowable eccentricity amount, using said second rotation speed as a drainage limit rotation speed, and, when the rotation speed of the rotary tub reaches the second rotation speed, performing a drainage process by controlling the rotary tub (30) such that the rotary tub is decelerated to a third rotation speed, wherein said third rotation speed is set to be a rotation speed above the first rotation speed for estimating positions of the ball balances and for deciding a point of time for an optimum spin-drying acceleration.

2. The drum type washing machine according to claim 1, wherein the second rotation speed is less than a resonance range rotation speed of the rotary tub (30).

3. The drum type washing machine according to claim 1, wherein the controller (200) controls the rotary tub (30) such that the rotary tub is accelerated to a spin-drying acceleration rotation speed after the rotation speed of the rotary tub is decreased to the third rotation speed.

4. The drum type washing machine according to claim 1, further comprising:

a wash motor drive unit (220) having a command voltage generator (221), wherein the controller (200) detects vibration from the rotary tub (30) using a command voltage generated by the command voltage generator (221).

5. The drum type washing machine according to claim 4, wherein the controller (200) calculates the sum of preceding zone command voltages, generated at a plurality of points of time in a preceding zone, and the sum of succeeding zone command voltages, generated at a plurality of points of time in a succeeding zone, to calculate the difference between the sum of preceding zone command voltages and the sum of succeeding zone command voltages, and, when the calculated difference between the sum of preceding zone command voltages and the sum of succeeding zone command voltages is not less than an allowable difference between the sum of preceding zone command voltages and the sum of succeeding zone command voltages, detects that vibration from the rotary tub has been generated.

6. A controlling method of a drum type washing machine having ball balancers, comprising:

   determining (302) whether a condition for performing a spin-drying operation is satisfied;
   when said condition for performing the spin-drying operation is satisfied, accelerating (306) a rotary tub (30) having the ball balancers mounted therein to a first rotation speed for a predetermined period of time; and
   accelerating (311) the rotary tub (30) to a second rotation speed,
   **characterized In that** the rotary tub (30) is accelerated to said first rotation speed to detect (307) the eccentricity amount of the rotary tub (30) by using an angular speed deviation during the rotation of the rotary tub (30), and, when the detected eccentricity amount is less than an allowable eccentricity amount, using said second rotation speed as a drainage limit rotation speed, and, performing a drainage process by decelerating (313) the rotary tub (30) to a third rotation speed, wherein said third rotation speed is set to be a rotation speed above the first rotation speed for estimating positions of the ball balances and for deciding a point of time for an optimum spin-drying acceleration.

7. The controlling method according to claim 6, wherein the second rotation speed is less than a resonance range rotation speed of the rotary tub (30).

8. The controlling method according to claim 6, further comprising:

   spin-drying (316) accelerating the rotary tub (30) after decelerating (313) the rotary tub to the third rotation speed.

9. The controlling method according to claim 6, further comprising:

   when the spin-drying operation entry condition is satisfied, detecting that vibration from the rotary tub (30) has been generated using a command voltage generated by a wash motor drive unit (220) to drive the rotary tub (30).

10. The controlling method according to claim 9, wherein the detecting that vibration from the rotary tub (30) has been generated includes calculating (318) the sum of preceding zone command voltages, generated at a plurality of points of time in a preceding zone, and the sum of succeeding zone command voltages, generated at a plurality of points of time in a succeeding zone, to calculate the difference between the sum of preceding zone command voltages and the sum of succeeding zone command voltages, and, when the calculated difference between the sum of preceding zone command voltages and the sum of succeeding zone command voltages is not less than an allowable difference between the sum of preceding zone command voltages and the sum of succeeding zone command voltages, detecting that vibration from the rotary tub has been generated.

11. The controlling method according to claim 6, wherein the first rotation speed is approximately 100 rpm.

12. The controlling method according to claim 6, herein the second rotation speed is approximately 180 rpm.

13. The controlling method according to claim 11, wherein the second rotation speed is approximately 180 rpm.

**Patentansprüche**

1. Trommel-Waschmaschine, die Kugel-Auswuchteinrichtungen aufweist, wobei sie umfasst:

   eine Drehtrommel (30), in der die Kugel-Auswuchteinrichtungen angebracht sind;
   einen Waschmotor (100), der die Drehtrommel (30) dreht; und
   eine Steuereinrichtung (200), die die Drehtrommel (30) so steuert, dass sie sich über einen vorgegebenen Zeitraum mit einer ersten Drehgeschwindigkeit dreht, und die Drehtrommel (30) so steuert, dass sie auf eine zweite Drehgeschwindigkeit beschleunigt wird, **dadurch gekennzeichnet, dass** die Drehtrommel (30) mit der ersten Drehgeschwindigkeit gedreht wird, um ein Maß an Exzentrizität der Drehtrommel (30) unter Verwendung einer Winkelgeschwindigkeitsabweichung bei Drehung der Drehtrommel (30) zu erfassen, und, wenn das erfasste Maß an Exzentrizität geringer ist als ein zulässiges Maß an Exzentrizität, die zweite Drehgeschwindigkeit als eine Ableit-Grenzdrehgeschwindigkeit verwendet wird, und, wenn die Drehgeschwindigkeit der Drehtrommel die zweite Drehgeschwindigkeit erreicht, ein Ableitprozess durchgeführt wird, indem die Drehtrommel (30) so gesteuert wird, dass die Drehtrommel auf eine dritte Drehgeschwindigkeit abgebremst wird, wobei die dritte Drehgeschwindigkeit so eingestellt ist, dass sie eine Drehgeschwindigkeit über der ersten Drehgeschwindigkeit ist, bei der Positionen der Kugel-Auswuchteinrichtungen geschätzt werden und ein Zeitpunkt für eine optimale Schleuder-Beschleunigung bestimmt wird.

2. Trommel-Waschmaschine nach Anspruch 1, wobei die zweite Drehgeschwindigkeit niedriger ist als eine Resonanzbereich-Drehgeschwindigkeit der Drehtrommel (30).

3. Trommel-Waschmaschine nach Anspruch 1, wobei die Steuereinrichtung (200) die Drehtrommel (30) so steuert, dass die Drehtrommel auf eine Schleuder-Beschleunigungs-Drehgeschwindigkeit beschleunigt wird, nachdem die Drehgeschwindigkeit der Drehtrommel auf die dritte Drehgeschwindigkeit verringert worden ist.

4. Trommel-Waschmaschine nach Anspruch 1, die des Weiteren umfasst:

   eine Waschmotor-Ansteuereinheit (22), die eine Befehlsspannungs-Erzeugungseinrichtung (221) aufweist, wobei die Steuereinrichtung (200) Schwingung von der Drehtrommel (30) unter Verwendung einer durch die Befehlsspannungs-Erzeugungseinrichtung (221) erzeugten Befehlsspannung erfasst.

5. Trommel-Waschmaschine nach Anspruch 4, wobei die Steuereinrichtung (200) die Summe von Befehlsspannungen einer vorhergehenden Zone, die zu einer Vielzahl von Zeitpunkten in einer vorhergehenden Zone erzeugt wurden, und die Summe von Befehlspannungen einer folgenden Zone, die zu einer Vielzahl von Zeitpunkten in einer folgenden Zone erzeugt werden, berechnet, um die Differenz zwischen der Summe von Befehlsspannungen der vorhergehenden Zone und der Summe von Befehlsspannungen der folgenden Zone zu errechnen, und, wenn die errechnete Differenz zwischen der Summe von Befehlsspannungen der vorhergehenden Zone und der Summe von Befehlsspannungen der folgenden Zone nicht kleiner ist als eine zulässige Differenz zwischen der Summe von Befehlsspannungen der vorhergehenden Zone und der Summe von Befehlsspannungen der folgenden Zone, erfasst, dass Schwingung von der Drehtrommel erzeugt worden ist.

6. Verfahren zum Steuern einer Trommel-Waschmaschine mit Kugel-Auswuchteinrichtungen, das umfasst:

   Feststellen (302), ob eine Bedingung zum Durchführen eines Schleudervorgangs erfüllt ist;
   wenn die Bedingung zum Durchführen des Schleudervorgangs erfüllt ist, Beschleunigen (306) einer Drehtrommel (30) mit den darin angebrachten Kugel-Ausgleichseinrichtungen auf eine erste Drehgeschwindigkeit über einen vorgegebenen Zeitraum; und
   Beschleunigen (311) der Drehtrommel (30) auf eine zweite Drehgeschwindigkeit,
   **dadurch gekennzeichnet, dass** die Drehtrommel (30) auf die erste Drehgeschwindigkeit beschleunigt wird, um das Maß an Exzentrizität der Drehtrommel (30) unter Verwendung der Winkelgeschwindigkeitsabweichung während der Drehung der Drehtrommel (30) zu erfassen (307), und, wenn das erfasste Maß an Exzentrizität geringer ist als ein zulässiges Maß an Exzentrizität, die zweite Drehgeschwindigkeit als eine Ableit-Grenzdrehgeschwindigkeit verwendet wird und ein Ableitprozess durchgeführt wird, indem die Drehtrommel (30) auf eine dritte Drehgeschwindigkeit abgebremst wird (313), wobei die dritte Drehgeschwindigkeit so eingestellt ist, dass sie eine Drehgeschwindigkeit über der ersten Drehgeschwindigkeit ist, bei der Positionen der Kugel-Auswuchteinrichtungen geschätzt werden und ein Zeitpunkt für eine optimale Schleuder-Beschleunigung bestimmt wird.

7. Steuerverfahren nach Anspruch 6, wobei die zweite Drehgeschwindigkeit niedriger ist als eine Resonanzbereich-Drehgeschwindigkeit der Drehtrommel (30).

8. Steuerverfahren nach Anspruch 6, das des Weiteren umfasst:

   Beschleunigen der Drehtrommel (30) zum Schleudern (316), nachdem die Drehtrommel auf die dritte Drehgeschwindigkeit abgebremst worden ist (313).

9. Steuerverfahren nach Anspruch 6, das des Weiteren umfasst:

   wenn die Bedingung zum Übergehen zum Schleudervorgang erfüllt ist, Erfassen, dass Schwingung von der Drehtrommel (30) erzeugt worden ist, unter Verwendung einer Befehlsspannung, die durch eine Waschmotor-Ansteuereinheit (220) zum Ansteuern der Drehtrommel (30) erzeugt wird.

10. Steuerverfahren nach Anspruch 9, wobei das Erfassen, dass Schwingung von der Drehtrommel (30) erzeugt worden ist, einschließt, dass die die Summe von Befehlsspannungen einer vorhergehenden Zone, die zu einer Vielzahl von Zeitpunkten in einer vorhergehenden Zone erzeugt wurden, und die Summe von Befehlspannungen einer folgenden Zone, die zu einer Vielzahl von Zeitpunkten in einer folgenden Zone erzeugt werden, berechnet werden, um die Differenz zwischen der Summe von Befehlsspannungen der vorhergehenden Zone und der Summe von Befehlsspannungen der folgenden Zone zu errechnen, und, wenn die errechnete Differenz zwischen der Summe von Befehlsspannungen der vorhergehenden Zone und der Summe von Befehlsspannungen der folgenden Zone nicht kleiner ist als eine zulässige Differenz zwischen der Summe von Befehlsspannungen der vorhergehenden Zone und der Summe von Befehlsspannungen der folgenden Zone, erfasst wird, dass Schwingung von der Drehtrommel erzeugt worden ist.

11. Steuerverfahren nach Anspruch 6, wobei die erste Drehgeschwindigkeit ungefähr 100 U/min beträgt.

12. Steuerverfahren nach Anspruch 6, wobei die zweite Drehgeschwindigkeit ungefähr 180 U/min beträgt.

13. Steuerverfahren nach Anspruch 11, wobei die zweite Drehgeschwindigkeit ungefähr 180 U/min beträgt.

## Revendications

1. Machine à laver du type à tambour dotée de compensateurs à roulement, comprenant :

   une cuve rotative (30) dans laquelle sont montés les compensateurs à roulement ;
   un moteur de lavage (100) destiné à faire tourner la cuve rotative (30) ; et
   un contrôleur (200) pour commander la cuve rotative (30) pour tourner à une première vitesse de rotation pendant une période de temps prédéterminée et pour commander la cuve rotative (30) pour l'accélérer jusqu'à une deuxième vitesse de rotation,
   **caractérisée en ce qu'**on fait tourner la cuve rotative (30) à ladite première vitesse de rotation pour détecter la valeur d'excentricité de la cuve rotative (30) en utilisant la durée de la vitesse angulaire pendant la rotation de la cuve rotative (30) et, lorsque la valeur de l'excentricité détectée est inférieure à une valeur d'excentricité admissible, on utilise ladite deuxième vitesse de rotation en tant que vitesse de rotation limite de vidange et, lorsque la vitesse de rotation de la cuve rotative atteint la deuxième vitesse de rotation, on exécute un processus de vidange en commandant la cuve rotative (30) de façon à décélérer la cuve rotative jusqu'à une troisième vitesse de rotation, dans lequel ladite troisième vitesse de rotation est fixée de manière à être une vitesse de rotation supérieure à la première vitesse de rotation pour estimer les positions des compensateurs à roulement et pour détecter un moment d'accélération optimale d'essorage.

2. Machine à laver du type à tambour selon la revendication 1, dans laquelle la deuxième vitesse de rotation est inférieure à la vitesse de rotation dans une plage de résonance de la cuve rotative (30).

3. Machine à laver du type à tambour selon la revendication 1, dans laquelle le contrôleur (200) commande la cuve rotative (30) de telle sorte à accélérer la cuve rotative jusqu'à une vitesse de rotation d'accélération d'essorage après avoir fait diminuer la vitesse de la cuve rotative jusqu'à la troisième vitesse de rotation.

4. Machine à laver du type à tambour selon la revendication 1, comprenant en outre :

   une unité d'excitation de moteur de lavage (220) comportant un générateur de tension de commande (221), dans lequel le contrôleur (200) détecte une vibration de la cuve rotative (30) en utilisant une tension de commande générée par le générateur de tension de commande (221) .

5. Machine à laver du type à tambour selon la revendication 4, dans laquelle le contrôleur (200) calcule la somme des tensions de commande de la zone précédente, générées à une pluralité d'instants dans une zone précédente, et la somme des tensions de commande de la zone suivante, générées à une pluralité d'instants dans une zone suivante, pour calculer la différence entre la somme des tensions de commande de la zone précédente et la somme des tensions de commande de la zone suivante et, lorsque la différence calculée entre la somme des tensions de commande de la zone précédente et la somme des tensions de commande de la zone suivante est supérieure ou égale à une différence admissible entre la somme des tensions de commande de la zone précédente et la somme des tensions de commande de la zone suivante, détecte qu'une vibration de la cuve rotative a été générée.

6. Procédé de commande d'une machine à laver du type à tambour dotée de compensateurs à roulement, comprenant :

   la détermination (302) du fait qu'une condition pour exécuter une opération d'essorage est satisfaite ;
   lorsque ladite condition pour exécuter une opération d'essorage est satisfaite, l'accélération (305) d'une cuve rotative (30) dans laquelle sont montés les compensateurs à roulement jusqu'à une première vitesse de rotation pendant une période de temps prédéterminée ; et
   l'accélération (311) de la cuve rotative (30) jusqu'à une deuxième vitesse de rotation,
   **caractérisé en ce qu'**on accélère la cuve rotative (30) jusqu'à ladite première vitesse de rotation pour détecter (307) la valeur d'excentricité de la cuve rotative (30) en utilisant l'écart de la vitesse angulaire pendant la rotation de la cuve rotative (30) et, lorsque la valeur de l'excentricité détectée est inférieure à une valeur d'excentricité admissible, on utilise ladite deuxième vitesse de rotation en tant que vitesse de rotation limite de vidange et on exécute un processus de vidange en effectuant une décélération (313) de la cuve rotative (30) jusqu'à une troisième vitesse de rotation, dans lequel ladite troisième vitesse de rotation est fixée de manière à être une vitesse de rotation supérieure à la première vitesse de rotation pour estimer les positions des compensateurs à roulement et pour détecter un moment d'accélération optimale d'essorage.

7. Procédé de commande selon la revendication 6, dans lequel la deuxième vitesse de rotation est inférieure à la vitesse de rotation dans une plage de résonance de la cuve rotative (30).

8. Procédé de commande selon la revendication 6, comprenant en outre :

   l'accélération de l'essorage (316) de la cuve rotative (30) après décélération (313) de la cuve rotative jusqu'à la troisième vitesse de rotation.

9. Procédé de commande selon la revendication 6, comprenant en outre :

   lorsque la condition d'entrée de fonctionnement d'essorage est satisfaite, la détection du fait qu'une vibration de la cuve rotative (30) a été générée en utilisant une tension de commande générée par une unité d'excitation du moteur de lavage (220) pour entraîner la cuve rotative (30).

10. Procédé de commande selon la revendication 9, dans lequel la détection du fait qu'une vibration de la cuve rotative (30) a été générée comporte le calcul (318) de la somme des tensions de commande de la zone précédente, générées à une pluralité d'instants dans une zone précédente et la somme des tensions de commande de la zone suivante, générées à une pluralité d'instants dans une zone suivante, pour calculer la différence entre la somme des tensions de commande de la zone précédente et la somme des tensions de commande de la zone suivante et, lorsque la différence calculée entre la somme des tensions de commande de la zone précédente et la somme des tensions de commande de la zone suivante est supérieure ou égale à une différence admissible entre la somme des tensions de commande de la zone précédente et la somme des tensions de commande de la zone suivante, détecte qu'une vibration de la cuve rotative a été générée.

11. Procédé de commande selon la revendication 6, dans lequel la première vitesse de rotation est approximativement de 100 tours/minute.

12. Procédé de commande selon la revendication 6, dans lequel la deuxième vitesse de rotation est approximativement de 180 tours/minute.

13. Procédé de commande selon la revendication 11, dans lequel la deuxième vitesse de rotation est approximativement de 180 tours/minute.

FIG. 1

# FIG. 2

FIG. 3

**FIG. 4**

START

301 INPUT SELECTED WASHING COURSE

302 SPIN-DRYING OPERATION ENTRY CONDITION?

NO

303 PERFORM ANOTHER OPERATION

A

YES

305 PERFORM LAUNDRY CLING: ACCELERATE ROTARY TUB TO FIRST ROTATION SPEED (ECCENTRICITY DETECTION ROTATION SPEED)

306 FIRST ROTATION SPEED (ECCENTRICITY DETECTION ROTATION SPEED) REACHED?

NO

YES

307 DETECT ECCENTRICITY AMOUNT

308 ECCENTRICITY AMOUNT < ALLOWABLE ECCENTRICITY AMOUNT

NO

YES

B

318 CALCULATE SUM OF PRECEDING ZONE COMMAND VOLTAGES AND SUM OF SUCCEEDING ZONE COMMAND VOLTAGES AND CALCULATE DIFFERENCE BETWEEN THE SUM OF PRECEDING ZONE COMMAND VOLTAGES AND THE SUM OF SUCCEEDING ZONE COMMAND VOLTAGES

D   E

319 DIFFERENCE BETWEEN THE SUM OF PRECEDING ZONE COMMAND VOLTAGES AND THE SUM OF SUCCEEDING ZONE COMMAND VOLTAGES < ALLOWABLE DIFFERENCE BETWEEN THE SUM OF PRECEDING ZONE COMMAND VOLTAGES AND THE SUM OF SUCCEEDING ZONE COMMAND VOLTAGES?

YES

NO

320 TERMINATE THE SPIN-DRYING OPERATION (STOP ROTATION OF WASH MOTOR)

C

# FIG. 5

# FIG. 6

ROTATION SPEED
OF ROTARY TUB

350

180
SECOND ROTATION SPEED
(DRAINAGE LIMIT
ROTATION SPEED)

160
THIRD ROTATION SPEED
(BALL BALANCER POSITION
ESTIMATE SPEED)

100
FIRST ROTATION SPEED
(ECCENTRICITY DETECTION
ROTATION SPEED)

TIME

a    b    c    d

**EP 2 083 109 B1**

## REFERENCES CITED IN THE DESCRIPTION

**Patent documents cited in the description**

- EP 1950336 A
- EP 1096050 A2
- EP 1533411 A2